# NEUE EUROPÄISCHE PATENTSCHRIFT

(11) **EP 1 336 211 B3**
(45) Veröffentlichungstag dieser Patentschrift: **18.01.2012**
(45) Hinweis auf die Patenterteilung: 08.09.2010
(21) Anmeldenummer: 01971708.1
(22) Anmeldetag: 14.09.2001
(51) Int. Cl.: H01M 8/04, H01M 8/24

(54) **BRENNSTOFFZELLENANLAGE**
FUEL CELL INSTALLATION
INSTALLATION A PILES A COMBUSTIBLE

(30) Priorität: 27.09.2000 DE 10047913
(43) Veröffentlichungstag der Anmeldung: 20.08.2003
(73) Patentinhaber: SIEMENS AKTIENGESELLSCHAFT, 80333 München (DE)
(72) Erfinder: BETTE, Willi, 91056 Erlangen (DE); LERSCH, Josef, 91336 Heroldsbach (DE); MATTEJAT, Arno, 91088 Bubenreuth (DE); STRAßER, Karl, 91058 Erlangen (DE)
(86) Internationale Anmeldenummer: PCT/DE2001/003530
(87) Internationale Veröffentlichungsnummer: WO 2002/027833

(56) Entgegenhaltungen:
- EP-A- 0 055 011
- WO-A-00/26983
- DE-C- 4 339 405
- US-A- 4 520 082

## Beschreibung

Die Erfindung betrifft eine Brennstoffzellenanlage gemäß Oberbegriff des Patentanspruchs 1.

Eine Brennstoffzellenanlage umfasst ein oder mehrere Brennstoffzellenmodule, die ihrerseits eine Anzahl von in Reihe geschalteten Brennstoffzellen enthalten. Die Brennstoffzellen können röhrenförmig oder als Platten ausgestaltet sein, wobei ein Brennstoffzellenmodul mit plattenförmigen Brennstoffzellen auch Brennstoffzellenblock genannt wird. In einer Brennstoffzelle wird durch die Zusammenführung von Wasserstoff (H₂) und Sauerstoff (O₂) in einer elektrochemischen Reaktion elektrische Energie und Wärme erzeugt, wobei sich der Wasserstoff (H₂) und der Sauerstoff (O₂) zu Wasser (H₂O) verbinden. Zu diesem Zweck wird in den Anodengasraum der Brennstoffzelle Wasserstoff und in den Kathodengasraum der Brennstoffzelle Sauerstoff eingeleitet. Der Wasserstoff kann entweder als reiner Wasserstoff oder als ein wasserstoffhaltiges Brenngas in die Brennstoffzelle eingespeist werden. Der Sauerstoff kann als reiner Sauerstoff oder auch beispielsweise in Form von Luft der Brennstoffzelle zugeleitet werden. Bei der Konstruktion eines Brennstoffzellenmoduls ist darauf zu achten, dass die Anodengasräume und die Kathodengasräume des Moduls in der Weise miteinander verbunden werden, dass keines der beiden Betriebsgase aus dem Brennstoffzellenmodul austreten kann. Es wurden daher in der Vergangenheit ausgefeilte Fügeund Verbindungstechniken entwickelt, die gewährleisten sollten, dass keines der Betriebsgase ungewollt aus einem Brennstoffzellenmodul austritt.

Während des Betriebs sind die einzelnen Zellen eines Brennstoffzellenmoduls starken Temperaturschwankungen unterworfen. Außerdem werden die Betriebsgase mit einem Überdruck in das Modul geleitet. Dieser Überdruck kann bis zu einigen Bar betragen.

Durch die Druck- und Temperaturschwankungen sind die Verbindungsstellen zwischen einzelnen Brennstoffzellen und die Verbindungsstellen zwischen den einzelnen Bestandteilen einer Brennstoffzelle, wie beispielsweise Verbundleiterplatte und Membran-Elektrolyt-Einheit, besonders starken Beanspruchungen unterworfen. Daher kommt es immer wieder zu Undichtigkeiten eines Brennstoffzellenblocks mit der Folge, dass Wasserstoff oder Sauerstoff aus dem Brennstoffzellenblock in die Umgebung austritt. Da der Austritt von Wasserstoff die Gefahr einer Explosion mit sich bringt und auch der Austritt von Sauerstoff mit einer starken Erhöhung der Brandgefahr einhergeht, ist der Austritt von Betriebsgasen aus einem Brennstoffzellenmodul in die Umgebung unbedingt zu verhindern.

Die DE 43 39 405 C offenbart eine Brennstoffzellenanlage gemäß Oberbegriff des Patentanspruchs 1 mit einem in einem gasdichten Gehäuse eingeschlossenen Brennstoffzellenstapel, bei dem bei einem Druckbetrieb der Brennstoffzellen Teile des Raumes zwischen dem Brennstoffzellenstapel und dem Gehäuse unter einen Druck gesetzt werden, der zwischen atmosphärischem Druck und 30 bar betragen kann.

Es ist ausgehend hiervon die Aufgabe der vorliegenden Erfindung, eine Brennstoffzellenanlage mit einer hohen Sicherheit gegen in die Umgebung austretende Betriebsgase anzugeben.

Diese Aufgabe wird durch eine Brennstoffzellenanlage gelöst, die erfindungsgemäß ein in einem gasdichten Druckbehälter eingeschlossenes Brennstoffzellenmodul umfasst. Treten im Brennstoffzellenmodul Undichtigkeiten auf, so dass ein Betriebsgas aus dem Modul austreten kann, so wird die Verteilung dieses Gases in die Umgebung durch den Druckbehälter wirksam vermieden. Das ausgetretene Betriebsgas sammelt sich im Druckbehälter, wodurch der Druck im gasdichten Druckbehälter ansteigt. Dieser Druckanstieg lässt sich leicht nachweisen und die Brennstoffzellenanlage oder zumindestens das Brennstoffzellenmodul bei einem Ansteigen des Gasdrucks im Behälter abschalten. Zu diesem Zweck sollte der Druckbehälter vorteilhafterweise für einen Druck ausgelegt sein, der mindestens 1,5 mal so groß ist wie der Betriebsdruck des Brennstoffzellenmoduls. Es wird somit sicher verhindert, dass aus dem Brennstoffzellenmodul austretendes Betriebsgas in die Umgebung der Brennstoffzellenanlage gelangen und dort Unheil anrichten kann.

Erfindungsgemäß sind an den Druckbehälter Gaszuleitungen angeschlossen und der Druckbehälter ist dafür vorgesehen, im Betrieb des Brennstoffzellenmoduls unter Überdruck zu stehen. Zum Erreichen einer sehr großen Betriebssicherheit der Brennstoffzellenanlage wird der Druckbehälter während des Betriebs des Brennstoffzellenmoduls mit einem Inertgas oder Schutzgas, wie beispielsweise Stickstoff, befüllt. Dieses Schutzgas steht im Druckbehälter unter einem Druck, der über dem Betriebsdruck des Brennstoffzellenmoduls liegt. Bei einem Leck des Brennstoffzellenmoduls kann somit kein Betriebsgas aus dem Modul austreten. Es strömt vielmehr das Schutzgas in das Brennstoffzellenmodul. Hierdurch ist gewährleistet, dass selbst bei gleichzeitigem Auftreten eines Lecks auf der Anodenseite und der Kathodenseite des Brennstoffzellenmoduls kein explosionsfähiges Gemisch in den Druckbehälter eintreten kann. Das aus dem Modul austretende Betriebsgas kann somit keinen schaden anrichten.

Zweckmäßigerweise umfasst das Brennstoffzellenmodul einen Brennstoffzellenblock, der für den Betrieb mit reinem Sauerstoff (O₂) und reinem Wasserstoff (H₂) ausgelegt ist. Ein solcher sogenannter "dead end"-Block erzeugt während des Betriebs so gut wie keine Abgase, da Wasserstoff und Sauerstoff vollständig in Wasser (H₂O) überführt werden. Durch den Betrieb mit reinem Wasserstoff und Sauerstoff ist das Austreten der Betriebsgase aus dem Modul mit besonderem Risiko verbunden. Eine Abschirmung durch den Druckbehälter ist somit besonders vorteilhaft.

Erfindungsgemäß umfasst die Brennstoffzellenanlage eine elektronische Zellspannungs-Überwachungseinrichtung. Diese Zellspannungs-Überwachungseinrichtung kann beispielsweise dafür ausgelegt sein, die Spannung des Brennstoffzellenmoduls, also die addierte Spannung aller Brennstoffzellen, zu überwachen. Die Überwachungseinrichtung kann jedoch auch so ausgestaltet sein, dass die Spannungen einzelner Brennstoffzellenmodulteile, wie z.B. die Kaskadenstufen eines Brennstoffzellenblocks, separat überwacht werden. Die genaueste Überwachung ist selbstverständlich erreicht, wenn die Zellspannungs-Überwachungseinrichtung jede Zelle des Brennstoffzellenmoduls einzeln oder zumindest jede mehrere Brennstoffzellen umfassende Untergruppe von Brennstoffzellen einzeln überwacht. Bei einem Leck im Brennstoffzellenmodul dringt Schutzgas in zumindest eine Brennstoffzelle. Dieses Schutzgas verdrängt das Betriebsgas in der Brennstoffzelle. Hierdurch sinkt die von der Brennstoffzelle erzeugte Zellspannung ab.

Das Absinken der Zellspannung wird von der elektronischen Zellspannungs-Überwachungseinrichtung überwacht. Bei Absinkend der Zellspannung unter einen vorgegebenen Spannungswert wird von der Zellspannungs-Überwachungseinrichtung ein Fehlersignal ausgegeben. Dieses Fehlersignal löst beispielsweise das Abschalten des Brennstoffzellenmoduls aus, dessen Betriebsgaszuleitungen geschlossen werden und das dann in einen sicheren Zustand gebracht wird. In einer weiteren Möglichkeit wird das Fehlersignal an eine Anzeigeeinrichtung einer Überwachungsstelle weitergegeben, beispielsweise auf einen Bildschirm eines Steuerpults oder an einen Fahrstand. Verbunden mit dem Fehlersignal kann auch eine Auswertung des Fehlers an die Überwachungsstelle weitergegeben werden. Diese Auswertung umfasst beispielsweise die Angabe der Größe der Undichtigkeit. Die Größe der Undichtigkeit steht in Abhängigkeit zum Absinken der Zellspannung einer Brennstoffzelle. Es kann somit von einer Person an der Überwachungsstelle oder von einer Steuereinheit entschieden werden, das Modul in bestimmten Situationen in Betrieb zu lassen. Dies ist deshalb möglich, da selbst bei Auftreten eines Lecks in einem Brennstoffzellenmodul kein Betriebsgas aus dem Modul austreten und eine Gefährdung der Umgebung der Brennstoffzellenanlage ausgeschlossen ist.

Die an die Überwachungsstelle ausgegebene Auswertung des Fehlers kann insbesondere den Ort der Undichtigkeit umfassen. Je nachdem, mit welcher Genauigkeit die Zellspannungs-Überwachungseinrichtung die einzelnen Zellen überwacht, kann das Leck sofort eindeutig räumlich lokalisiert werden. Je nach elektrische Verschaltung des Brennstoffzellenmoduls und je nach Ausstattung des Moduls mit Zuleitungen und Ventilen ist es auch möglich, nur ein Teil des Brennstoffzellenmoduls, beispielsweise nur eine Kaskadenstufe, auszuschalten und den Rest des Moduls weiter in Betrieb zu halten.

Zusätzlich können weitere Angaben zum mit der Undichtigkeit verbundenen Sicherheitsrisiko oder der weiteren Einsatzfähigkeit des Brennstoffzellenmoduls an die Überwachungsstelle gegeben werden.

Zweckmäßigerweise umschließt der Druckbehälter auch das Versorgungsmodul des Brennstoffzellenmoduls. Ein Brennstoffzellenmodul umfasst eine Anzahl von röhrenförmigen oder planaren Brennstoffzellen mit dazugehörigen Ver- und Entsorgungsleitungen. Diese Leitungen können zusammen mit weiteren Versorgungseinrichtungen wie Wasserabscheidern, Pumpen, Verdichtern, Befeuchtern, Ventilen, Stromleitungen, Sensoren oder Kabelsträngen in einem Versorgungsmodul zusammengefasst sein. Dieses Versorgungsmodul ist in der Regel direkt am Brennstoffzellenmodul angeordnet. Bei einem auch das Versorgungsmodul umschließenden Druckbehälter werden auch im Versorgungsmodul auftretende Undichtigkeiten, beispielsweise an Flaschen, Rohren oder Verdichtern unschädlich gemacht. Es kann kein Betriebsgas in die Umgebung der Brennstoffzellenanlage gelangen. Ein weiterer Vorteil dieser Ausgestaltung der Erfindung liegt darin, dass eine Vielzahl von Leitungen und Verbindungen zwischen dem Versorgungsmodul und dem Brennstoffzellenmodul besteht. Umschließt der Druckbehälter beide Module, so reduziert sich die Anzahl der Durchführungen durch den Druckbehälter erheblich. Hierdurch ist der Druckbehälter sicherer und in der Konstruktion einfacher auszuführen.

Mit Vorteil ist die Brennstoffzellenanlage als Stromversorgungseinrichtung für ein elektrisches Aggregat eines Unterseebootes ausgeführt. In einem Unterseeboot müssen besondere Sicherheits- und Betriebsanforderungen erfüllt werden. Ein Druckbehälter um das Brennstoffzellenmodul gewährleistet sicher, dass kein Betriebsgas aus der Brennstoffzellenanlage austreten kann, eine Anforderung die im Unterseeboot zwingend erforderlich ist. Da in einem U-Boot kaum Belüftung möglich ist, ist hier die Explosions- und Brandgefahr besonders groß. Da sich eine Explosion oder ein Brand in einem U-Boot besonders verheerend auswirkt, gelten hier extrem strenge Sicherheitsvorschriften, denen ein Druckbehälter genügt. Durch die Erfindung können die Sicherheitsbestimmungen bezüglich Brandund Explosionsgefahr eingehalten werden. Außerdem zahlt sich der Vorteil, dass ein Brennstoffzellenmodul trotz eines Lecks unter Umständen weiter betrieben werden kann, in einem Unterseeboot besonders aus: In einem Unterseeboot können Bedingungen eintreten, unter denen die Stromversorgung auch bei extremsten Bedingungen unter allen Umständen aufrechterhalten bleiben muss. Selbst wenn das Brennstoffzellenmodul extremen mechanischen Beanspruchungen ausgesetzt ist, beispielsweise bei starker Beschleunigung oder auch bei Schock, und dadurch Risse im Brennstoffzellenmodul Lecks verursachen, kann das Brennstoffzellenmodul unter Umständen in Betrieb bleiben. Ohne jegliche Gefahr hervorzurufen, kann das Modul so lange in Betrieb bleiben, bis so viel Schutzgas in das Modul eingetreten ist, dass die Stromerzeugung des Moduls zum erliegen kommt.

Ein weiterer Vorteil wird dadurch erreicht, dass der Druckbehälter Metall mit einer hohen magnetischen Suszeptibilität aufweist. Ein Brennstoffzellenmodul erzeugt einen hohen elektrischen Strom. Je nach Anzahl der Zellen innerhalb des Brennstoffzellenmoduls kann dieser Strom einige hundert Ampere betragen. Ein solcher Strom erzeugt ein großes Magnetfeld. Ein Unterseeboot wird unter anderem durch sein Magnetfeld bzw. das durch das U-Boot veränderte Magnetfeld der Umgebung aufgespürt. Daher muss eine in einem U-Boot eingebaute Brennstoffzellenanlage magnetisch abgeschirmt sein. Diese Abschirmung wird zuverlässig dadurch erreicht, indem die stromführenden Module der Brennstoffzellenanlage durch einen Behälter umschlossen werden, der ein Metall mit hoher magnetischer Suszeptibilität aufweist. Der Behälter kann beispielsweise aus solch einem Metall gefertigt sein oder er umfasst eine Schicht aus einem Metall mit einer hohen magnetischen Suszeptibilität, beispielsweise sogenanntes µ-Metall. Durch einen solchen Behälter wird auf einfache und extrem störungssichere Art und Weise eine dreifache Abschirmung des Brennstoffzellenmoduls erreicht: Der Druckbehälter schirmt das Magnetfeld ab, ausserdem wird auch das vom Brennstoffzellenmodul ausgestrahlte elektrische Feld abgeschirmt und zusätzlich wird die Umgebung der Brennstoffzellenanlage von aus dem Brennstoffzellenmodul austretenden Betriebsgasen abgeschirmt. Durch diese einfache Maßnahme wird die Erfüllung mehrerer Betriebs- und Sicherheitsanforderungen an eine Brennstoffzellenanlage in einem Unterseeboot erfüllt.

Ein Ausführungsbeispiel der Erfindung wird anhand einer Figur erläutert.

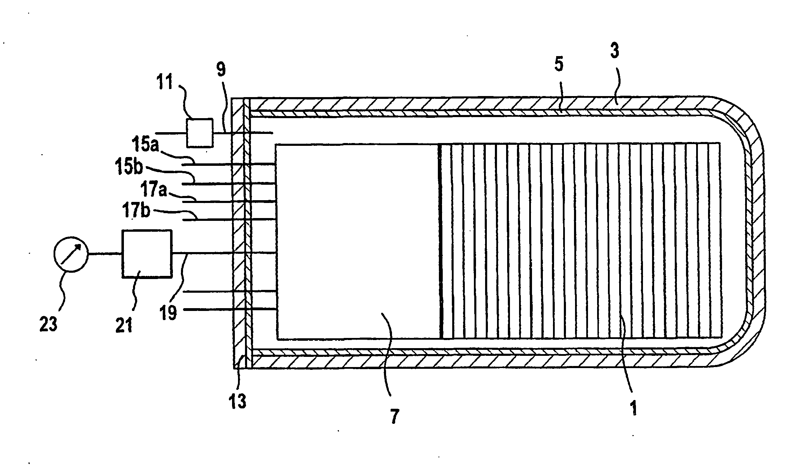

Figur 1 zeigt ein Brennstoffzellenmodul 1 einer Brennstoffzellenanlage, das in einem gasdichten Druckbehälter 3 eingeschlossen ist. Der Druckbehälter 3 umfasst eine stählerne Aussenhaut, die innen mit einer Schicht aus einem Metall 5 mit einer hohen magnetischen Suszeptibilität ausgekleidet ist. An das Brennstoffzellenmodul 1 angeschlossen ist ein Versorgungsmodul 7, in dem verschiedene Einrichtungen zur Betriebsgasver- und -entsorgung, Produktwasserentsorgung, Ableitung der elektrischen Energie und Überwachung angeordnet sind. An den Druckbehälter 3 ist eine Gaszuleitung 9 angeschlossen, durch die ein Gas von außen in den Druckbehälter 3 eingeleitet werden kann. An dieser Gaszuleitung 9 ist ein Drucksensor 11 zur Überwachung des Innendrucks des Druckbehälters 3 angebracht. An der Frontplatte 13 des Druckbehälters 3 sind Durchführungen für die Zuleitungen 15a und 15b von Brenngas und Oxidationsgas zum Versorgungsmodul sowie Leitungen 17a und 17b zur Abfuhr der elektrischen Energie aus dem Brennstoffzellenmodul eingebracht. Durch eine weitere Durchführung führt ein Signalkabelstrang 19 von den Brennstoffzellen des Brennstoffzellenmoduls 1 zu einer elektronischen Zellspannungs-Überwachungseinrichtung 21. Der Druckbehälter 3 mit dem Brennstoffzellenmodul 1 und dem Versorgungsmodul 7 sind Teil einer Brennstoffzellenanlage, die als Stromversorgungseinrichtung für ein elektrisches Aggregat eines U-Bootes ausgeführt ist.

Während des Betriebs der Brennstoffzellenanlage wird der Druckbehälter 3 durch die Leitung 9 mit Stickstoff (N₂) befüllt. Der Innendruck im Druckbehälter 3 liegt um 20% höher als der größte Betriebsdruck in den Brennstoffzellen des Brennstoffzellenmoduls 1. Tritt während des Betriebs der Brennstoffzellenanlage ein Leck in der Außenabdichtung des Brennstoffzellenmoduls 1 auf, so dringt kein Betriebsgas aus dem Brennstoffzellenmodul 1 aus, sondern Schutzgas aus dem Inneren des Druckbehälters 3 in mindestens eine Brennstoffzelle des Brennstoffzellenmoduls 1 ein. Dieses Schutzgas verdrängt Betriebsgas in der Brennstoffzelle mit der Folge, dass die Zellspannung dieser Zelle sinkt. Das Absinken der Zellspannung wird durch die elektronische Zellspannungs-Überwachungseinrichtung 21 überwacht. Im normalen Betriebsmodus der Brennstoffzellenanlage vergleicht die elektronische Zellspannungs-Überwachungseinrichtung 21 die elektrische Spannung der Zellen oder einer Anzahl von Zellen mit einem Grenzwert. Unterschreitet die Spannung diesen Grenzwert, so wird die Betriebsgaszufuhr zu dem Modul 1 abgeschaltet und das Modul 1 wird in einen sicheren Zustand gebracht. In einem anderen Betriebsmodus der Brennstoffzellenanlage wird bei Unterschreitung des Grenzwertes ein Signal an eine Anzeigeeinrichtung 23 weitergegeben. Der Betrieb des Brennstoffzellenmoduls. 21 wird jedoch weitergeführt. Auf der Anzeigeeinrichtung 23 wird außerdem der zeitliche Verlauf der Spannung des Brennstoffzellenmoduls 1 sowie der betroffenen Zellen dargestellt. Ferner wird der Ort der Undichtigkeit dargestellt. Somit kann das Bedienpersonal oder eine Steuereinheit der Brennstoffzellenanlage entscheiden, ob das Leck ein so kritisches Ausmaß hat, dass ein Abschalten des Brennstoffzellenmoduls 1 angebracht ist.

## Patentansprüche

1. Brennstoffzellenanlage mit einem in einem gasdichten Druckbehälter (3) eingeschlossenen Brennstoffzellenmodul (1), wobei an den Druckbehälter (3) eine Gaszuleitung (9) angeschlossen ist und der Druckbehälter (3) dafür vorgesehen ist, im Betrieb unter Überdruck zu stehen, wobei der Druckbehälter (3) während des Betriebs des Brennstoffzellenmoduls (1) mit einem Schutzgas befüllt ist, das im Druckbehälter (3) unter einem Druck steht, der über dem Betriebsdruck des Brennstoffzellenmoduls (1) liegt,
**dadurch gekennzeichnet, dass** die Brennstoffzellenanlage eine elektronische Zellspannungs-Überwachungseinrichtung (21) zur Überwachung eines Absinkens der Zellspannung umfasst, die die elektrische Spannung der Zellen oder einer Anzahl von Zellen mit einem Grenzwert im Hinblick auf eine Unterschreitung des Grenzwerts vergleicht.

2. Brennstoffzellenanlage nach Anspruch 1,
**dadurch gekennzeichnet, dass** der Druckbehälter (3) auch das Versorgungsmodul (7) des Brennstoffzellenmoduls (1) umschließt.

3. Brennstoffzellenanlage nach einem der vorhergehenden Ansprüche,
die als Stromversorgungseinrichtung für ein elektrisches Aggregat eines Unterseebootes ausgeführt ist.

4. Brennstoffzellenanlage nach Anspruch 3,
**dadurch gekennzeichnet, dass** der Druckbehälter (3) Metall (5) mit einer hohen magnetischen Suszeptibilität aufweist.

## Claims

1. Fuel cell system having a fuel cell module (1) enclosed in a gastight pressure vessel (3), wherein a gas feedline (9) is connected to the pressure vessel (3), and the pressure vessel (3) is intended to be under superatmospheric pressure in operation, wherein the pressure vessel (3), while the fuel cell module (1) is operating, is filled with a shielding gas which inside the pressure vessel (3) is under a pressure that is higher than the operating pressure of the fuel cell module (1), **characterized in that** the fuel cell system comprises an electronic cell-voltage-monitoring device (21) for monitoring a drop in the cell voltage which device compares an electric voltage of the cells or of a number of cells with a limit value in order to ascertain whether the voltage has fallen below the limit value.

2. Fuel cell system according to Claim 1, **characterized in that** the pressure vessel (3) also surrounds the supply module (7) of the fuel cell module (1).

3. Fuel cell system according to one of the preceding claims, which is designed as a power supply device for an electrical unit of a submarine.

4. Fuel cell system according to Claim 3, **characterized in that** the pressure vessel (3) includes metal (5) with a high magnetic susceptibility.

## Revendications

1. Installation de piles à combustible comprenant un module ( 1 ) de piles à combustible enfermé dans une cuve ( 3 ) sous pression, étanche au gaz, dans laquelle un conduit ( 9 ) d'amenée du gaz est raccordé à la cuve ( 3 ) sous pression et la cuve ( 3 ) sous pression est prévue pour, en fonctionnement, être en surpression, la cuve ( 3 ) sous pression étant, pendant le fonctionnement du module ( 1 ) de piles à combustible, remplie d'un gaz de protection, qui est dans la cuve ( 3 ) sous une pression qui est supérieure à la pression de fonctionnement du module ( 1 ) de piles à combustible,
**caractérisée en ce que** l'installation de pile à combustible comprend un dispositif ( 21 ) électronique de contrôle de la tension de pile pour contrôler un abaissement de la tension de pile, qui compare la tension électrique de la pile ou d'un certain nombre de piles à une valeur limite en ce qui concerne un passage en dessous de la valeur limite.

2. Installation de piles à combustible suivant la revendication 1,
**caractérisée en ce que** la cuve ( 3 ) sous pression renferme aussi le module ( 7 ) d'alimentation du module ( 1 ) de piles à combustible.

3. Installation de piles à combustible suivant l'une des revendications précédentes, qui est réalisée en dispositif d'alimentation en courant d'un groupe électrique d'un sous-marin.

4. Installation de piles à combustible suivant la revendication 3,
**caractérisée en ce que** la cuve ( 3 ) sous pression comporte du métal ( 5 ) ayant une grande susceptibilité magnétique.
